# NEUE EUROPÄISCHE PATENTSCHRIFT

(11) **EP 1 291 573 B2**
(45) Veröffentlichungstag und Bekanntmachung des Hinweises auf die Entscheidung über den Einspruch: **10.02.2010**
(45) Hinweis auf die Patenterteilung: 04.01.2006
(21) Anmeldenummer: 02015932.3
(22) Anmeldetag: 17.07.2002
(51) Int. Cl.: F16P 3/14

(54) **Sicherungsverfahren und optoelektronischer Sensor**
Safety method and optoelectronic sensor
Procédé de protection et détecteur optoélectronique

(30) Priorität: 05.09.2001 DE 10143505
(43) Veröffentlichungstag der Anmeldung: 12.03.2003
(60) Teilanmeldung: 05009625.4
(73) Patentinhaber: SICK AG, 79183 Waldkirch (DE)
(72) Erfinder: Braune, Ingolf, 79194 Gundelfingen (DE); Plasberg, Georg, Dr., 79353 Bahlingen (DE)
(74) Vertreter: Manitz, Finsterwald & Partner GbR

(56) Entgegenhaltungen:
- EP-A1- 0 875 873
- WO-A-00/67932
- DE-B- 2 750 234
- DE-C- 852 037
- GB-A- 1 307 078
- GB-A- 2 120 742
- US-A- 4 430 879
- US-A- 5 579 884

## Beschreibung

Die Erfindung betrifft ein Verfahren zur Sicherung eines Gefahrenbereichs eines bewegten, eine Angriffsstelle aufweisenden Werkzeugs, insbesondere eines vertikal nach unten bewegten Oberwerkzeugs einer Gesenkbiegepresse, wobei der Gefahrenbereich durch die Erstreckung der Angriffsstelle des Werkzeugs und den Nachlaufweg des Werkzeugs entlang der Bewegungsrichtung vorgegeben ist, wobei ein optoelektronischer Sensor mit dem Werkzeug mitbewegt wird und den Gefahrenbereich überwacht, und wobei bei Detektion eines Eingriffs in den Gefahrenbereich ein Abschaltvorgang zum sofortigen Anhalten der Werkzeugbewegung ausgelöst wird. Die Erfindung betrifft ferner ein Werkzeug mit einem entsprechenden optoelektronischen Sensor.

Hintergrund der Erfindung ist das Bestreben, Verletzungen einer Bedienperson zu verhindern, die an dem bewegten Werkzeug einer Maschine arbeitet, beispielsweise indem die Bedienperson zu verarbeitende Werkstükke dem Werkzeug zuführt. Im Falle der genannten Gesenkbiegepresse kann - ohne geeignete Sicherungsmaßnahmen - das Oberwerkzeug eine Verletzung oder Abtrennung der Finger oder Hände der Bedienperson verursachen.

Eine unmittelbare Verletzungsgefahr besteht für die Bedienperson innerhalb des Gefahrenbereichs, der sich ausgehend von der Angriffsstelle des Werkzeugs in Bewegungsrichtung des Werkzeugs erstreckt. Die Angriffsstelle des Werkzeugs umfaßt beispielsweise einen Stößel oder einen Stempel, und sie erstreckt sich, insbesondere bei der genannten Gesenkbiegepresse, typischerweise entlang einer Längsrichtung, beispielsweise entlang einer Biegelinie oder Schnittkante des bewegten Werkzeugs. Der Gefahrenbereich entspricht somit einem Raumbereich, der zum einen durch die Ausdehnung der Angriffsstelle und zum anderen durch den Nachlaufweg des Werkzeugs, also durch die nach Auslösung eines Abschaltsignals vom Werkzeug noch zurückgelegte Wegstrecke vorgegeben ist.

Zur Sicherung dieses Gefahrenbereichs ist es bekannt, zumindest eine Sendeeinrichtung und eine Empfangseinrichtung eines optoelektronischen Sensors mit dem Werkzeugs mitzubewegen. Dieser Sensor überwacht durch ständiges Aussenden und Empfangen eines kollimierten Sendelichtstrahls, ob ein Eingriff in den Gefahrenbereich erfolgt. Falls dies anhand einer Unterbrechung des Sendelichtstrahls detektiert wird, wird ein Abschaltvorgang ausgelöst, der zu einem Anhalten der Werkzeugbewegung führt.

Diese bekannten Sicherungsverfahren und -sensoren können nicht in allen Anwendungsfällen die erwünschte Sicherheit bieten. Dies ist zunächst darauf zurückzuführen, daß der von den bekannten Sensoren tatsächlich überwachte Teil des Gefahrenbereichs wegen des Nachlaufweges einen gewissen Abstand von der Angriffsstelle des Werkzeugs einnimmt, so daß der unmittelbar an der Angriffsstelle angrenzende Teil des Gefahrenbereichs nicht überwacht wird. Vor allem jedoch ist das bekannte Überwachungsprinzip im wesentlichen auf die Erkennung von statischen Eingriffen beschränkt, also von Eingriffen, die zum Zeitpunkt der Werkzeugbewegung bereits bestehen und erst nachfolgend detektiert werden, nämlich wenn aufgrund der Mitbewegung des Sensors das betreffende Körperteil der Bedienperson indirekt in den überwachten Teil des Gefahrenbereichs gelangt.

Aus der WO-A-0067932 sind ein Verfahren mit den Merkmalen des Oberbegriffs des Anspruchs 1 und ein Werkzeug mit den Merkmalen des Oberbegriffs des Anspruchs 10 bekannt.

Es ist eine Aufgabe der Erfindung, bei einem bewegten Werkzeug die Sicherheit der Bedienperson hinsichtlich aller Arten möglicher Eingriffe zu erhöhen, ohne daß hierdurch die Wirtschaftlichkeit des Arbeitsprozesses beeinträchtigt wird.

Diese Aufgabe wird durch ein Verfahren mit den Merkmalen des Anspruchs 1 gelöst.

Die Aufgabe wird für ein Werkzeug mit einem optoelektronischen Sensor in entsprechender Weise durch die Merkmale des unabhängigen Anspruchs 10 gelöst.

Die Erfindung sorgt für eine zusätzliche Sicherung gegenüber sogenannten dynamischen Eingriffen, also gegenüber Eingriffen aus der Bewegung des Bedieners, die dann erfolgen, wenn die Werkzeugbewegung bereits begonnen hat. Derartige dynamische Eingriffe erfolgen typischerweise von der Bedienerseite aus, insbesondere von schräg oben oder von vorn. Beispielsweise geschieht es häufig, daß die Bedienperson ein unerwartetes Verrutschen des zu bearbeitenden Werkstücks bemerkt und deshalb - ungeachtet der bereits eingesetzten Werkzeugbewegung - als unmittelbare Reaktion in den Gefahrenbereich nachgreift, um eine Nachjustierung durchzuführen. Auch ein Abrutschen der Hände der Bedienperson von dem während der Werkzeugbewegung gegen eine Anschlageinrichtung zu pressenden Werkstück kann einen typischen dynamischen Eingriff darstellen.

Bei der Erfindung erfolgt eine Sicherung gegenüber derartigen dynamischen Eingriffen, indem zusätzlich eine Überwachung zumindest innerhalb einer Begrenzungsfläche erfolgt, die - bei beliebiger Form - letztlich eine Art Schutzglocke bildet. Die Begrenzungsfläche besitzt nämlich bezüglich einer Ebene, die parallel zu der Werkzeugbewegung und senkrecht zu der Erstreckungsrichtung der Angriffsstelle des Werkzeugs verläuft, einen Querschnitt, der sich zumindest entlang eines Kreisbogens oder - insbesondere in radialer Richtung - darüber hinaus erstreckt.

Bei der Erfindung ist also ein Überwachungsbereich mit einer Begrenzungsfläche vorgesehen, deren minimale Ausdehnung - im Querschnitt - durch einen Kreisbogen vorgegeben ist. Der Mittelpunkt dieses Kreisbogens liegt - bezogen auf die Bewegungsrichtung des Werkzeugs - vor der Angriffsstelle des Werkzeugs. Im Falle des vertikal nach unten bewegten Oberwerkzeugs einer Gesenkbiegepresse befindet sich der Mittelpunkt des genannten Kreisbogens also in einem gewissen Abstand unterhalb der Angriffsstelle.

Außerdem besitzt der genannte Kreisbogen einen Radius, der wenigstens so groß gewählt ist, daß die genannte Begrenzungsfläche sich in radialer Richtung zumindest bis zu der Angriffsstelle des Werkzeugs erstreckt, so daß bezüglich der Bewegungsrichtung des Werkzeugs keine überwachungsfreie Lücke zwischen der Begrenzungsfläche und der Angriffsstelle des Werkzeugs besteht.

Der Radius des genannten Kreisbogens wird nachfolgend auch als "Überwachungsradius" bezeichnet.

Die Erfindung gewährleistet somit eine verbesserte Sicherung des Gefahrenbereichs gegenüber dynamischen Eingriffen. Dennoch ist - wie bei den bekannten Sicherungsverfahren und -sensoren - ein ungefährliches und somit zulässiges Nachjustieren des zu bearbeitenden Werkstücks möglich, nämlich indem der Überwachungsbereich bzw. dessen Begrenzungsfläche bezüglich der Bewegungsrichtung des Werkzeugs räumlich begrenzt ist, so daß ein Eingriff in den an den Überwachungsbereich anschließenden Raumbereich keinen Abschaltvorgang auslöst.

Es ist bevorzugt, wenn die Begrenzungsfläche des Überwachungsbereichs an das Werkzeug angrenzt. Auf diese Weise ist nämlich sichergestellt, daß kein Eingriff zwischen der Angriffsstelle des Werkzeugs und dem Überwachungsbereich erfolgen kann, was insbesondere bei schnellen dynamischen Eingriffen zu einer Verletzungsgefahr führen könnte.

Vorzugsweise ist die Begrenzungsfläche des Überwachungsbereichs - entsprechend der minimalen Querschnittsausdehnung gemäß einem Kreisbogen - bezogen auf die Angriffsstelle des Werkzeugs konvex gewölbt.

Um ein möglichst umfassendes Schutzschild gegenüber dynamischen Eingriffen zu erzeugen, erstreckt sich der genannte Kreisbogen - und somit die Begrenzungsfläche des Überwachungsbereichs - vorzugsweise entlang eines Segmentwinkels von wenigstens 30°, insbesondere von ungefähr 90° oder ungefähr 180°. Diese Winkelangaben beziehen sich im Hinblick auf den Anwendungshintergrund einer Gesenkbiegepresse insbesondere auf einen im wesentlichen vertikalen Überwachungsradius als Ausgangspunkt.

Entsprechend dieser Winkelangaben kann der Querschnitt der Begrenzungsfläche also im wesentlichen die Form eines Viertelkreises oder eines Halbkreises, der durch das Werkzeug bzw. dessen Angriffsstelle unterbrochen sein kann, besitzen. Mit anderen Worten kann der Überwachungsbereich im wesentlichen die Form eines Kreisquadranten oder einer Kreishälfte aufweisen.

Weiterhin ist es bevorzugt, wenn die Begrenzungsfläche des Überwachungsbereichs sich entlang der Erstreckungsrichtung der Angriffsstelle des Werkzeugs erstreckt. Die Begrenzungsfläche überdeckt somit beispielsweise die Mantelfläche eines Zylindersegments, insbesondere eines Viertel- oder Halbzylindersegments.

In einer bevorzugten Ausführungsform der Erfindung handelt es sich bei der Begrenzungsfläche entlang des Kreisbogens und/oder entlang der Erstreckungsrichtung der Angriffsstelle des Werkzeugs um eine im wesentlichen geschlossen überwachte Fläche, so daß jeglicher Eingriff bzw. Durchdringen der Begrenzungsfläche detektiert werden kann. Eine derartige geschlossene Fläche läßt sich beispielsweise durch aneinandergrenzende Lichtstrahlbündel realisieren.

Zu dem Verlauf der Begrenzungsfläche des Überwachungsbereichs ist ferner anzumerken, daß zwar durch den genannten Kreisbogen-Querschnitt die minimale Erstreckung grundsätzlich vorgegeben ist. Allerdings kann der Verlauf an die Form des zu bearbeitenden Werkstücks angepaßt sein. Alternativ oder zusätzlich kann die Begrenzungsfläche an einer Stelle unterbrochen sein, an der aufgrund des Aufbaus des Werkzeugs ein Eingriff in den Gefahrenbereich ohnehin inhärent ausgeschlossen ist.

Für die Dimensionierung des Überwachungsbereichs wird vorzugsweise eine Resthöhe berücksichtigt, die bei einem Abschalten bzw. Anhalten des Werkzeugs stets eingehalten wird. Diese Resthöhe bestimmt sich allgemein nach dem größten Körperteil der Bedienperson, das bei dynamischer Annäherung in den Gefahrenbereich gelangen kann. Die notwendige Resthöhe bestimmt sich aus dem definierten Körperteildurchmesser und der zulässigen Quetschung. Für einen Fingerschutz kann eine mögliche Resthöhe beispielsweise ca. 10 bis 14 mm betragen.

Die Berücksichtigung der Resthöhe bei der Erstreckung des Überwachungsbereichs in Bewegungsrichtung des Werkzeugs kann dahingehend erfolgen, daß die Erstreckung - ausgehend von der Angriffsstelle des Werkzeugs - wenigstens die Summe aus dem vorstehend genannten Überwachungsradius und der erläuterten Resthöhe beträgt. Im Falle des vertikal nach unten bewegten Oberwerkzeugs einer Gesenkbiegepresse führt diese Berücksichtigung also zu einer Erweiterung des Überwachungsbereichs nach unten.

Der die Ausdehnung des Kreisbogens vorgebende minimale Überwachungsradius ist bevorzugt durch die Ansprechzeit des gegebenenfalls ausgelösten Abschaltvorgangs und/oder die maximale Annäherungs- bzw. Eintrittsgeschwindigkeit der Bedienperson vorgegeben, insbesondere durch das Produkt aus Ansprechzeit und maximaler Annäherungsgeschwindigkeit. Dadurch ist gewährleistet, daß selbst bei schnellstmöglichem Eingriff der Abschaltvorgang ausgelöst wird, noch bevor das in den Überwachungsbereich eindringende Körperteil der Bedienperson mit dem Werkzeug in Kontakt kommt. Bei einer derartigen Bemessung kann der Überwachungsradius beispielsweise zwischen 20 und 50 mm, insbesondere zwischen 24 und 40 mm betragen.

Alternativ hierzu kann für die Bemessung des Überwachungsradius die Bewegungsgeschwindigkeit des Werkzeugs, die Ansprechzeit des Abschaltvorgangs und/oder der Nachlaufweg des Werkzeugs berücksichtigt werden. Insbesondere kann der Überwachungsradius wenigstens die Summe aus dem Produkt von Bewegungsgeschwindigkeit und Ansprechzeit einerseits und Nachlaufweg andererseits betragen. In diesem Fall ist insbesondere im Hinblick auf einen Eingriff in Verlängerung der Bewegungsrichtung des Werkzeugs der gesamte Bremsweg des Werkzeugs berücksichtigt. Bei einer derartigen Bemessung kann der Überwachungsradius beispielsweise zwischen 6 und 16 mm, insbesondere zwischen 10 und 12 mm betragen.

Was die Lage des Mittelpunkts des erläuterten Kreisbogens betrifft, so kann dieser ausgehend von der Angriffsstelle des Werkzeugs in Bewegungsrichtung des Werkzeugs um wenigstens den Überwachungsradius - gemäß einer der vorstehend erläuterten Berechnungsgrundlagen - beabstandet angeordnet sein.

Die Überwachung des Überwachungsbereichs erfolgt innerhalb der Begrenzungsfläche, also bezüglich des gesamten von der Begrenzungsfläche eingeschlossenen Raumvolumens.

Schließlich ist zu der Bewegung des Werkzeugs anzumerken, daß diese in eine vergleichsweise schnelle Schließbewegung und eine nachfolgende, langsame Schließbewegung zur Bearbeitung unterteilt sein kann, wobei erst im Rahmen dieser Bearbeitungsbewegung das Werkstück vom Werkzeug erfaßt und bearbeitet, insbesondere umgeformt wird.

Der Übergang von der schnellen Schließbewegung in die langsame Schließ- oder Bearbeitungsbewegung erfolgt vorzugsweise in einem Umschaltpunkt, welcher vom Bediener programmiert oder angelernt wird. Das Ziel des Bedieners ist es, diesen Punkt möglichst dicht an die Werkstückoberfläche zu legen. Die Überwachung bzw. die Schutzeinrichtung wird vorzugsweise ab diesem Umschaltpunkt deaktiviert (sogenanntes Muting), da der Schutz nun durch die langsame Schließ- bzw. Bearbeitungsbewegung erfolgt.

Die Sendeeinrichtung weist beispielsweise eine oder mehrere Laserdioden oder Leuchtdioden auf, deren Sendelichtstrahl mittels einer Sendeoptik aufgeweitet wird, so daß diese Sendeeinrichtung sich zur Überwachung eines Raumvolumens eignet. Hierzu ist eine ortsauflösende Empfangseinrichtung vorgesehen, beispielsweise CCD- oder CMOS-Empfänger mit einer matrixförmigen Anordnung von Empfangselementen.

Entsprechend der Überwachungsfunktion ist die Sendeeinrichtung und/oder die Empfangseinrichtung vorzugsweise innerhalb des genannten Kreisbogens angeordnet, wobei diese Anordnung sich auf den bereits genannten Querschnitt parallel zur Werkzeugbewegung und senkrecht zur Erstreckungsrichtung der Angriffsstelle des Werkzeugs bezieht. Bei dieser Anordnung verlaufen die Sendelichtstrahlen bevorzugt parallel zur Erstreckungsrichtung der Angriffsstelle des Werkzeugs. Um die Werkzeugbewegung ungehindert durchführen zu können, ist es bevorzugt, wenn die Sendeeinrichtung und/ oder die Empfangseinrichtung außerhalb des Gefahrenbereichs des Werkzeugs in einer grundsätzlich bekannten seitlichen Anordnung vorgesehen ist.

Dabei können die Sendeeinrichtung und die Empfangseinrichtung als sogenanntes Aktiv-Aktiv-System in einer unmittelbaren Gegenüberstellung aufgebaut sein, oder als Aktiv-Passiv-System, bei dem die Sendeeinrichtung und die Empfangseinrichtung gemeinsam einem Reflektor gegenüberstehen.

Der Sensor besitzt eine Auswerteeinrichtung, die anhand des Empfangssignals der Empfangseinrichtung eine Unterbrechung des Sendelichts zu erkennen vermag und gegebenenfalls den Abschaltvorgang auslöst. Selbstverständlich muß diese Auswerteeinrichtung nicht mit dem Werkzeug mitbewegt werden.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1a und 1b: Teile einer Gesenkbiegepresse in einer schematischen Seitenansicht mit einer weiteren Begrenzungsfläche des Überwachungsbereichs, und zwar zu verschiedenen Zeitpunkten der Werkzeugbewegung,
- Fig. 2, 3 und 4: Teile einer Gesenkbiegepresse in einer schematischen Seitenansicht, jeweils mit unterschiedlichen Begrenzungsflächen des Überwachungsbereichs, und
- Fig. 5a und 5b: Teile einer bekannten Gesenkbiegepresse, und zwar in einer Vorderansicht bzw. einer Seitenansicht.

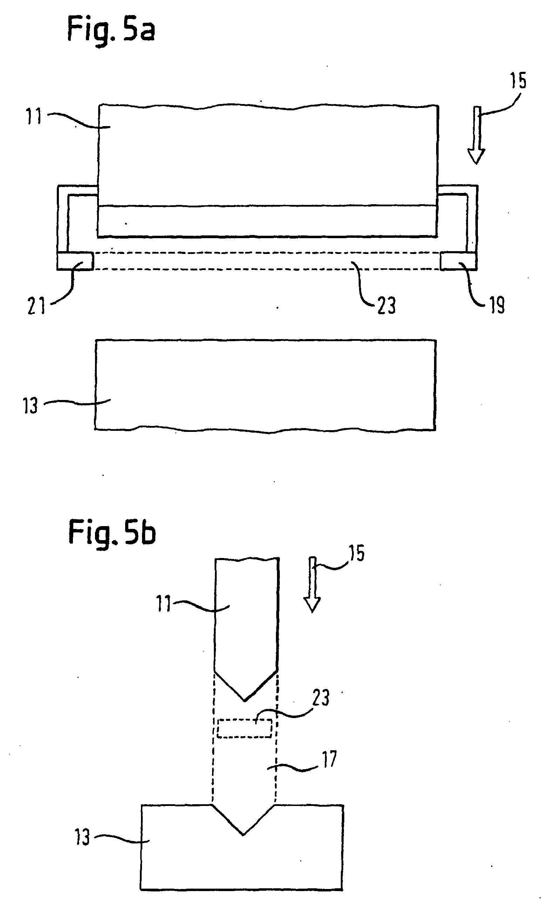

Die in den Fig. 5a und 5b gezeigte bekannte Gesenkbiegepresse besitzt ein Oberwerkzeug 11 und ein Unterwerkzeug 13. Das Oberwerkzeug 11 ist zu einer vertikal nach unten gerichteten Schließbewegung 15 antreibbar, um letztlich ein zwischen das Oberwerkzeug 11 und das Unterwerkzeug 13 eingeführtes Werkstück, beispielsweise ein Blech, zu verformen.

Der räumliche Bereich, der sich ausgehend von dem Oberwerkzeug 11 in Richtung der Schließbewegung 15 bis zu dem Unterwerkzeug 13 erstreckt, bildet einen Gefahrenbereich 17 für die Bedienperson, die das Werkstück zwischen Oberwerkzeug 11 und Unterwerkzeug 13 einführen und dort in einer bestimmten Lage justieren und halten soll (vgl. Fig. 5b).

Für die bekannte Überwachung des Gefahrenbereichs 17 sind eine Sendeeinrichtung 19 und eine Empfangseinrichtung 21 vorgesehen, die in einer Gegenüberstellung an den beiden Seiten des Oberwerkzeugs 11 montiert sind und dementsprechend der Schließbewegung 15 folgen (Fig. 5a). Die Sendeeinrichtung 19 emittiert einen Sendelichtbalken 23 in Richtung der Empfangseinrichtung 21. Der Sendelichtbalken 23 besitzt einen rechtekkigen Querschnitt. Er verläuft innerhalb des Gefahrenbereichs 17, und zwar bezüglich der Richtung der Schließbewegung 15 vom Oberwerkzeug 11 geringfügig beabstandet (Fig. 5b).

Falls eine Unterbrechung oder Abschwächung des empfangenen Sendelichts detektiert wird, wird ein Abschaltvorgang ausgelöst, um die Schließbewegung 15 des Oberwerkzeugs 11 anzuhalten. Ein derartiger Abschaltvorgang erfolgt beispielsweise, wenn sich im unteren Teil des Gefahrenbereichs 17 eine Hand der Bedienperson befindet und wenn aufgrund der Abwärtsbewegung 15 des Oberwerkzeugs 11 und somit des Sendelichtbalkens 23 die Hand ab einem gewissen Zeitpunkt zu einer Unterbrechung des Sendelichtbalkens 23 führt (statischer Eingriff).

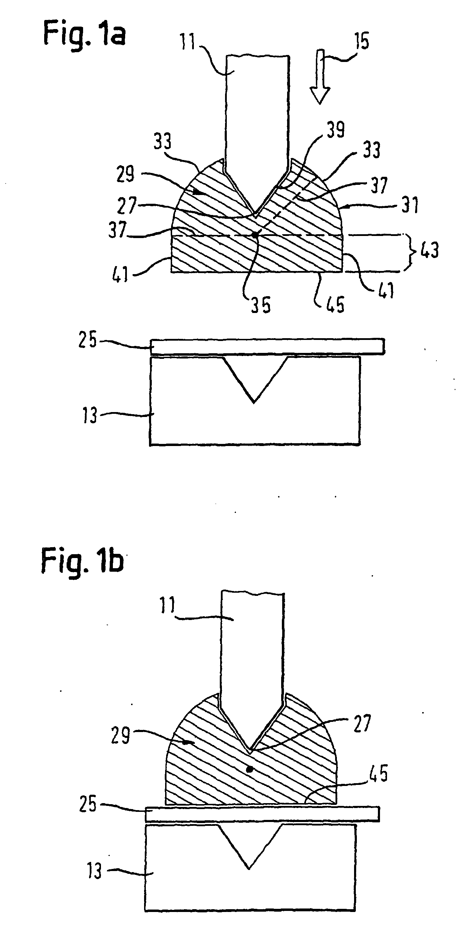

Fig. 1a und 1b zeigen demgegenüber die Überwachung gemäß dem erfindungsgemäßen Verfahren und Sensor.

In Fig. 1a und 1b sind ebenfalls ein Oberwerkzeug 11 sowie ein Unterwerkzeug 13 gezeigt, auf dem ein zu verformendes Werkstück 25 aufliegt. Das Oberwerkzeug 11 führt zunächst eine schnelle Schließbewegung 15 durch. Die Angriffsstelle, also die untere Spitze des Oberwerkzeugs 11 ist mit dem Bezugszeichen 27 gekennzeichnet. Diese Angriffsstelle 27 erstreckt sich als Stempel in Betrachtungsrichtung.

Erfindungsgemäß wird zur Sicherung des Gefahrenbereichs des Oberwerkzeugs 11 ein Überwachungsbereich 29 überwacht, der in den Fig. 1a und 1b schraffiert dargestellt ist und durch eine - in den Fig. 1a und 1b als durchgezogene Linie dargestellte - Begrenzungsfläche 31 begrenzt ist.

Die Begrenzungsfläche 31 besitzt auf den beiden Seiten des Oberwerkzeugs 11 jeweils einen Abschnitt in Form eines Kreisbogens 33. Die beiden Kreisbögen 33 weisen einen gemeinsamen Mittelpunkt 35 auf, der bezüglich der Schließbewegungsrichtung 15 unterhalb der Angriffsstelle 27 des Oberwerkzeugs 11 liegt. Der in Fig. 1a gestrichelt eingezeichnete Radius 37 des jeweiligen Kreisbogens 33 ist so bemessen, daß die Begrenzungsfläche 31 deutlich oberhalb der Angriffsstelle 27 an das Oberwerkzeug 11 anschließt.

Im Bereich des Oberwerkzeugs 11 besitzt die Begrenzungsfläche 31 einen Abschnitt 39, der dem Umriß des Oberwerkzeugs 11 angepaßt ist, so daß der Überwachungsbereich 29 im wesentlichen unmittelbar an das Oberwerkzeug 11 angrenzt. Somit verläuft ein Ende des jeweiligen Kreisbogens 33 im Bereich des Oberwerkzeugs 11 im wesentlichen in horizontaler Richtung, und das jeweilige andere Ende im wesentlichen vertikal nach unten. Die beiden Kreisbögen 33 bilden einen Halbkreis, dessen Verlauf im Bereich des Oberwerkzeugs 11 gemäß dem Abschnitt 39 der Begrenzungsfläche 31 an die Form des Oberwerkzeugs 11 angepaßt ist.

Außerdem ist der Überwachungsbereich 29 nach unten verlängert, nämlich indem die Begrenzungsfläche 31 zwei Vertikalabschnitte 41 aufweist, die sich an das vertikal auslaufende Ende des jeweiligen Kreisbogenabschnitts 33 anschließen. Die Verlängerung des Überwachungsbereichs 29 gemäß der Vertikalabschnitte 41 nach unten erfolgt somit um eine Resthöhe 43.

Schließlich ist der Überwachungsbereich 29 nach unten durch einen Horizontalabschnitt 45 der Begrenzungsfläche 31 begrenzt.

Die Überwachung des Gefahrenbereichs sowohl innerhalb des Überwachungsbereichs 29 als auch entlang der Begrenzungsfläche 31 erfolgt durch eine - nicht dargestellte - Sendeeinrichtung und Empfangseinrichtung in einer Gegenüberstellung in einer entsprechenden Weise wie in Fig. 5a gezeigt. Demzufolge erstrecken sich der Überwachungsbereich 29 und die Begrenzungsfläche 31 gemäß Fig. 1a und 1b in Betrachtungsrichtung, das heißt parallel zur Erstreckungsrichtung der Angriffsstelle 27 des Oberwerkzeugs 11.

Der Ablauf des Sicherungsverfahrens gestaltet sich wie folgt:

Das Oberwerkzeug 11 wird bei aktivierter Überwachung zunächst zu einer vergleichsweise schnellen Schließbewegung 15 vertikal nach unten angetrieben. Dabei bewegen sich der Überwachungsbereich 29, seine Begrenzungsfläche 31 und somit auch der Mittelpunkt 35 der Kreisbögen 33 mit dem Oberwerkzeug 11 mit. Währenddessen kann unterhalb des Überwachungsbereichs 29 bzw. unterhalb des Horizontalabschnitts 45 der Begrenzungsfläche 31 noch ein Eingriff in den Gefahrenbereich erfolgen.

Falls jedoch ein Eingriff in einem beliebigen Teil des Überwachungsbereichs 29 erfolgt, bzw. wenn die Begrenzungsfläche 31 aufgrund einer Annäherung der Bedienperson an irgendeinem Abschnitt 33, 39, 41, 45 durchdrungen wird, wird dies als Unterbrechung des von der Sendeeinrichtung emittierten Sendelichts detektiert. Daraufhin wird ein Abschaltvorgang ausgelöst, um das Oberwerkzeug 11 anzuhalten und dadurch eine mögliche Verletzung der Bedienperson zu vermeiden.

Sobald das Oberwerkzeug 11 und der Überwachungsbereich 29 die in Fig. 1b gezeigte Lage erreicht haben, wird von der schnellen Schließbewegung 15 auf eine vergleichsweise langsame Berabeitungsbewegung umgestellt, durch die das Werkstück 25 verformt werden soll. Gleichzeitig wird die Überwachung deaktiviert. Der Schutz der Bedienperson wird nun durch die langsame Schließ- bzw. Bearbeitungsbewegung realisiert.

Das Sicherungsverfahren und der Sensor gemäß der Erfindung bieten somit gegenüber der bekannten Sicherung des Gefahrenbereichs gemäß den Fig. 5a und 5b den Vorteil, daß eine Sicherung gegen dynamischen Eingriffen durch die Bedienperson gewährleistet ist. Falls nämlich während der schnellen Schließbewegung 15 ein Eingriff in den Gefahrenbereich, beispielsweise durch ein sogenanntes Nachgreifen erfolgt, ist durch die radiale Erstreckung des Überwachungsbereichs 29 entlang der Kreisbögen 33 um den Radius 37 gewährleistet, daß ein rechtzeitiges Abschalten der Bewegung des Oberwerkzeugs 11 erfolgt.

Im Hinblick auf Eingriffe von schräg oben oder von der Seite ist der Radius 37 beispielsweise wenigstens so groß gewählt, daß er dem Produkt der Ansprechzeit des Abschaltvorgangs und der höchstmöglichen Annäherungsgeschwindigkeit der Bedienperson entspricht.

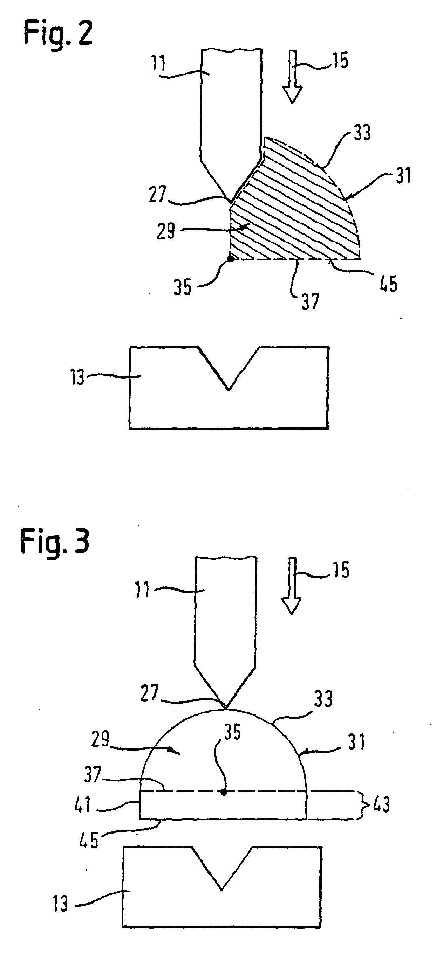

Fig. 2 bis 4 zeigen in entsprechenden Seiten- bzw. Querschnittsansichten weitere Ausführungsformen einer Überwachung.

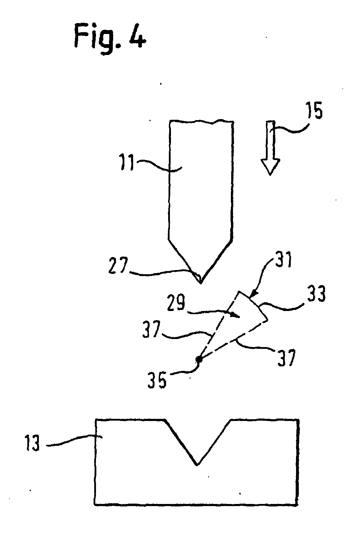

Fig. 3 und 4 zeigen keine Ausführungsform der Erfindung da keine Überwachung bezüglich des gesamten von der Begrenzungsfläche eingeschlossenen Raumvolumens erfolgt.

Bei der Ausführungsform gemäß Fig. 2 ist lediglich auf der der Bedienperson zugewandten Seite des Oberwerkzeugs 11 eine Sicherung vorgesehen, so daß der Überwachungsbereich 29 in der gezeigten Querschnittsansicht im wesentlichen eine Viertelkreisfläche einnimmt bzw. bezogen auf seine räumliche Ausdehnung ein Viertelzylindersegment umfaßt.

In dem Beispiel gemäß Fig. 2 wird die Begrenzungsfläche 31 des Überwachungsbereichs 29 nicht eigens überwacht, wie durch die gestrichelte Darstellung der Begrenzungsfläche 31 zum Ausdruck kommt. Es ist jedoch auch hier möglich, die Begrenzungsfläche 31 zu überwachen.

Bei der Ausführungsform gemäß Fig. 3 erfolgt eine Überwachung beispielsweise entlang der Begrenzungsfläche 31, also entlang des Halbkreisbogens 33, der Vertikalabschnitte 41 und des Horizontalabschnitts 45.

Der Mittelpunkt 35 des Kreisbogens 33 ist hier genau um den Radius 37 des Kreisbogens 33 unterhalb der Angriffsstelle 27 angeordnet.

Für den unteren Teil des Überwachungsbereichs 29 ist - ähnlich wie bei der Ausführungsform gemäß Fig. 1a und 1b - eine minimale Resthöhe 43 vorgesehen.

Fig. 4 zeigt die minimal erforderliche Erstreckung der Begrenzungsfläche 31, die erforderlich ist, um eine Sicherung gegenüber Eingriffen von der Seite bzw. von schräg oben zu erzielen.

Hier erfolgt eine Überwachung lediglich entlang des Kreisbogens 33 (durchgezogene Linie) bzw. entlang der Verlängerung des Kreisbogens 33 in Betrachtungsrichtung. Der Kreisbogen 33 erstreckt sich über wenigstens 30°, wobei die Winkelhalbierende des Kreisbogens 33 bzw. des entsprechenden Kreissegments einen Winkel von ca. 45° zur Horizontalen bildet. Die Begrenzungsfläche 31 erstreckt sich somit flächig konvex.

Der Mittelpunkt 35 des Kreisbogens 33 ist um den Radius 37 genau unterhalb der Angriffsstelle 27 angeordnet.

Zu den Ausführungsformen gemäß Fig. 1a, 1b, 2, 3 und 4 ist noch anzumerken, daß die Erstreckung, insbesondere die radiale Erstreckung des Überwachungsbereichs 29 bzw. der Begrenzungsfläche 31 auch über den minimal erforderlichen Überwachungsradius hinausgehen kann. So entspricht der in den Fig. 1a und 1b gezeigte Radius 37 der Kreisbögen 33 nicht unbedingt dem minimal erforderlichen Überwachungsradius, sondern kann über diesen hinausgehen, beispielsweise um ein vollständiges Umschließen der Unterseite des Oberwerkzeugs 11 zu gewährleisten. Es ist auch möglich, daß die Begrenzungsfläche 31 im Querschnitt nicht unbedingt eine Kreisbogenform, sondern beispielsweise einen rechtwinkligen Verlauf besitzt.

### Bezugszeichenliste

- 11: Oberwerkzeug
- 13: Unterwerkzeug
- 15: Schließbewegung
- 17: Gefahrenbereich
- 19: Sendeeinrichtung
- 21: Empfangseinrichtung
- 23: Sendelichtbalken
- 25: Werkstück
- 27: Angriffsstelle
- 29: Überwachungsbereich
- 31: Begrenzungsfläche
- 33: Kreisbogen
- 35: Mittelpunkt
- 37: Radius des Kreisbogens
- 39: Abschnitt der Begrenzungsfläche im Bereich des Oberwerkzeugs
- 41: Vertikalabschnitt der Begrenzungsfläche
- 43: Resthöhe
- 45: Horizontalabschnitt der Begrenzungsfläche

## Patentansprüche

1. Verfahren zur Sicherung eines Gefahrenbereichs (17) eines bewegten, eine Angriffsstelle (27) aufweisenden Werkzeugs, insbesondere eines vertikal nach unten bewegten Oberwerkzeugs (11) einer Gesenkbiegepresse, wobei die Angriffsstelle die Spitze des Werkzeugs ist,
wobei der Gefahrenbereich durch die Erstreckung der Angriffsstelle (27) des Werkzeugs und den Nachlaufweg des Werkzeugs entlang der Bewegungsrichtung vorgegeben ist,
wobei ein optoelektronischer Sensor mit dem Werkzeug (11) mitbewegt wird und den Gefahrenbereich überwacht, und wobei bei Detektion eines Eingriffs in den Gefahrenbereich ein Abschaltvorgang zum sofortigen Anhalten der Werkzeugbewegung ausgelöst wird, wobei ein Überwachungsbereich (29) mit einer Begrenzungsfläche (31) überwacht wird, deren Querschnitt parallel zur Werkzeugbewegung (15) und senkrecht zur Erstreckungsrichtung der Angriffsstelle (27) des Werkzeugs sich zumindest entlang eines Kreisbogens (33) oder über einen Kreisbogen (33) hinaus erstreckt,
**dadurch gekennzeichnet,**
**daß** zur erweiterten Sicherung des Gefahrenbereichs gegenüber dynamischen Eingriffen der Mittelpunkt (35) des Kreisbogens von der Angriffsstelle (27) des Werkzeugs in Bewegungsrichtung (15) des Werkzeugs beabstandet angeordnet ist und der Kreisbogen (33) einen Radius (37) aufweist, der wenigstens so groß ist wie der Abstand zwischen dem Mittelpunkt (35) des Kreisbogens und der Angriffsstelle (27) des Werkzeugs, wobei die Überwachung des Überwachungsbereichs (29) mittels einer Anordnung aus wenigstens einer Lichtsendeeinrichtung und einer ortsauflösenden Empfangseinrichtung erfolgt, wobei ein Sendelichtstrahl der Lichtsendeeinrichtung mittels einer Sendeoptik aufgeweitet wird und die Empfangseinrichtung eine matrixförmige Anordnung von Empfangselementen aufweist, so daß die Überwachung bezüglich des gesamten von der Begrenzungsfläche eingeschlossenen Raumvolumens erfolgt.

2. Verfahren nach Anspruch 1,
**dadurch gekennzeichnet,**
**daß** die Begrenzungsfläche (31) des Überwachungsbereichs (29) an das Werkzeug (11) angrenzt, und/oder
**daß** die Begrenzungsfläche (31) des Überwachungsbereichs (29) bezüglich der Angriffsstelle (27) des Werkzeugs (11) konvex gewölbt ist.

3. Verfahren nach einem der vorangehenden Ansprüche,
**dadurch gekennzeichnet,**
**daß** der Kreisbogen (33) sich entlang eines Kreissegmentwinkels von wenigstens 30°, insbesondere von ca. 90° oder ca. 180° erstreckt, wobei die Winkelhalbierende des Kreissegmentwinkels vorzugsweise einen Winkel von 45° zur Horizontalen bildet, und/oder daß der Querschnitt der Begrenzungsfläche (31) im wesentlichen die Form eines Viertelkreises oder eines Halbkreises aufweist, und/oder daß ein Ende des Kreisbogens (33) horizontal in Richtung des Werkzeugs verläuft (11), und/oder
**daß** ein Ende des Kreisbogens (33) vertikal nach unten verläuft.

4. Verfahren nach einem der vorangehenden Ansprüche,
**dadurch gekennzeichnet,**
**daß** die Begrenzungsfläche (31) des Überwachungsbereichs (29) sich parallel zu der Erstreckungsrichtung der Angriffsstelle (27) des Werkzeugs (11) erstreckt, und/oder
**daß** die Begrenzungsfläche (31) entlang des Kreisbogens (33) zumindest im wesentlichen geschlossen ist, und/oder daß der Verlauf der Begrenzungsfläche (31) des Überwachungsbereichs (29) an die Form des Werkzeugs (11), an die Form des zu bearbeitenden Werkstücks und/oder an einen geometriebedingten Ausschluß eines Eingriffs angepaßt ist, und/oder
**daß** die Erstreckung des Überwachungsbereichs (29) ausgehend von der Angriffsstelle (27) des Werkzeugs (11) in dessen Bewegungsrichtung (15) wenigstens die Summe aus dem Radius (37) des Kreisbogens (33) und einer Resthöhe (43) beträgt, wobei die Resthöhe (43) durch das zu schützende Körperteil der Bedienperson vorgegeben ist.

5. Verfahren nach einem der vorangehenden Ansprüche, **dadurch gekennzeichnet,**
**daß** der Radius (37) des Kreisbogens (33) durch die Ansprechzeit des Abschaltvorgangs und/oder die maximale Annäherungsgeschwindigkeit einer Bedienperson vorgegeben ist,
wobei der Radius (37) des Kreisbogens (33) insbesondere wenigstens das Produkt aus Ansprechzeit und maximaler Annäherungsgeschwindigkeit beträgt, und/oder
wobei der Radius (37) des Kreisbogens (33) vorzugsweise zwischen 20 und 50 mm, insbesondere zwischen 24 und 40 mm beträgt.

6. Verfahren nach einem der vorangehenden Ansprüche,
**dadurch gekennzeichnet,**
**daß** der Radius (37) des Kreisbogens (33) durch die Bewegungsgeschwindigkeit des Werkzeugs, die Ansprechzeit des Abschaltvorgangs und/oder den Nachlaufweg des Werkzeugs vorgegeben ist, wobei der Radius (37) des Kreisbogens (33) insbesondere wenigstens die Summe aus Produkt von Bewegungsgeschwindigkeit und Ansprechzeit einerseits und Nachlaufweg andererseits beträgt,
und/ oder
wobei der Radius (37) des Kreisbogens (33) vorzugsweise zwischen 6 und 16 mm, insbesondere zwischen 10 und 12 mm beträgt.

7. Verfahren nach einem der vorangehenden Ansprüche,
**dadurch gekennzeichnet,**
**daß** der Mittelpunkt (35) des Kreisbogens (33) ausgehend von der Angriffsstelle (27) des Werkzeugs (11) in Bewegungsrichtung (15) des Werkzeugs wenigstens um den Radius (37) des Kreisbogens (33) beabstandet angeordnet ist, insbesondere wenigstens um die Summe aus Produkt von Bewegungsgeschwindigkeit des Werkzeugs und Ansprechzeit des Abschaltvorgangs einerseits und Nachlaufweg des Werkzeugs andererseits, und/oder
**daß** der Mittelpunkt (35) des Kreisbogens (33) sich mit dem Werkzeug (11) mitbewegt.

8. Verfahren nach einem der vorangehenden Ansprüche,
**dadurch gekennzeichnet,**
**daß** die Bewegung des Werkzeugs (11) in eine Schließbewegung (15) und eine nachfolgende langsamere Bearbeitungsbewegung unterteilt ist,
wobei der Übergang von der Schließbewegung (15) zu der Bearbeitungsbewegung vorzugsweise zu einem Zeitpunkt erfolgt, zu dem der Überwachungsbereich (29) unmittelbar oder mit einem Abstand von weniger als 10 mm an die Sollposition des zu bearbeitenden Werkstücks (25) anschließt, und/oder
wobei die Überwachung des Überwachungsbereichs (29) vorzugsweise zum Zeitpunkt des Übergangs von der Schließbewegung (15) zu der Bearbeitungsbewegung deaktiviert wird.

9. Verfahren nach einem der vorangehenden Ansprüche,
**dadurch gekennzeichnet,**
**daß** es sich bei der Angriffsstelle (27) des Werkzeugs (11) um eine längliche Biegelinie oder Schnittkante handelt.

10. Werkzeug mit einem optoelektronischen Sensor zur Sicherung eines Gefahrenbereichs (17) des Werkzeugs,
wobei das Werkzeug bewegbar ist und eine Angriffsstelle (27) aufweist, und wobei es sich bei dem Werkzeug insbesondere um ein vertikal nach unten bewegtes Oberwerkzeug (11) einer Gesenkbiegepresse handelt, und wobei die Angriffsstelle die Spitze des Werkzeugs ist,
wobei der Gefahrenbereich durch die Erstreckung der Angriffsstelle (27) des Werkzeugs und den Nachlaufweg des Werkzeugs entlang der Bewegungsrichtung (15) vorgegeben ist,
wobei der Sensor wenigstens eine Sendeeinrichtung zum Aussenden von Sendelicht in Richtung des Gefahrenbereichs, eine Empfangseinrichtung zum Empfangen von Sendelicht aus dem Gefahrenbereich, und eine Auswerteeinrichtung zum Auslösen eines Abschaltvorgangs bei Detektion eines Eingriffs in den Gefahrenbereich aufweist,
wobei der Sensor zumindest teilweise mit dem Werkzeug (11) mitbewegbar ist, und
wobei das Sendelicht in einen Überwachungsbereich (29) aussendbar und aus diesem empfangbar ist, der durch eine Begrenzungsfläche (31) begrenzt ist, deren Querschnitt parallel zur Werkzeugbewegung und senkrecht zur Erstreckungsrichtung der Angriffsstelle des Werkzeugs sich zumindest entlang eines Kreisbogens (33) oder über einen Kreisbogen (33) hinaus erstreckt,
**dadurch gekennzeichnet,**
**daß** zur erweiterten Sicherung des Gefahrenbereichs gegenüber dynamischen Eingriffen der Mittelpunkt (35) des Kreisbogens von der Angriffsstelle (27) des Werkzeugs in Bewegungsrichtung (15) des Werkzeugs beabstandet angeordnet ist und der Kreisbogen (33) einen Radius (37) aufweist, der wenigstens so groß ist wie der Abstand zwischen dem Mittelpunkt (35) des Kreisbogens und der Angriffsstelle (27) des Werkzeugs, wobei die Sendeeinrichtung eine Sendeoptik aufweist, durch die ein Sendelichtstrahl der Sendeeinrichtung aufweitbar ist, so daß die Sendeeinrichtung sich zur Überwachung eines Raumvolumens eignet, und wobei die Empfangseinrichtung ortsauflösend ist und einen matrixförmigen photoelektrischen Empfänger aufweist, so daß der Sensor dazu ausgebildet ist, daß die Überwachung bezüglich des gesamten von der Begrenzungsfläche eingeschlossenen Raumvolumens erfolgt.

11. Werkzeug nach Anspruch 10,
**dadurch gekennzeichnet,**
**daß** die Sendeeinrichtung wenigstens eine Laserdiode oder Leuchtdiode aufweist.

12. Werkzeug nach einem der Ansprüche 10 und 11,
**dadurch gekennzeichnet,**
**daß** die Empfangseinrichtung einen CCD- oder CMOS-Empfänger aufweist.

13. Werkzeug nach einem der Ansprüche 10 bis 12,
**dadurch gekennzeichnet,**
**daß** die Sendeeinrichtung und/oder die Empfangseinrichtung innerhalb des Kreisbogens (33) angeordnet ist.

## Claims

1. A method of securing a hazardous zone (17) of a moved tool having an area of action (27), in particular of a vertically downwardly moved upper tool (11) of a bending press, wherein the area of action is the apex of the tool,
wherein the hazardous zone is pre-determined by the extent of the area of action (27) of the tool and by the slowing down path of the tool along the direction of movement;
wherein an optoelectronic sensor is moved with the tool (11) and monitors the hazardous zone and wherein, when an intervention into the hazardous zone is detected, a switching off process is triggered for the immediate stopping of the tool movement;
wherein a monitored zone (29) with a boundary surface (31) is monitored whose cross-section extends parallel to the tool movement (15) and perpendicular to the direction of extent of the area of action (27) of the tool at least along an arc of a circle (33) or beyond an arc of a circle (33),
**characterized in that**,
for the expanded securing of the hazardous zone with respect to dynamic interventions, the center (35) of the arc of a circle is arranged spaced apart from the area of action (27) of the tool in the direction of movement (15) of the tool; and **in that** the arc of a circle (33) has a radius (37) which is at least as large as the spacing between the center (35) of the arc of a circle and the area of action (27) of the tool, with the monitoring of the monitored zone (29) taking place by means of an arrangement of at least one light transmission device and a spatially resolving reception device, with a transmitted light beam of the light transmission device being expanded by means of an optical transmission system and the reception device having a matrix-like arrangement of reception elements so that the monitoring takes place with respect to the total spatial volume enclosed by the boundary surface.

2. A method in accordance with claim 1, **characterized in that** the boundary surface (31) of the monitored zone (29) is adjacent to the tool (11); and/or **in that** the boundary surface (31) of the monitored zone (29) is convexly curved with respect to the area of action (27) of the tool (11).

3. A method in accordance with any one of the preceding claims, **characterized in that** the arc of a circle (33) extends over an angle of a segment of a circle of at least 30°, in particular of approximately 90° or approximately 180°, with the bisector line of the angle of the segment of the circle preferably forming an angle of 45° with the horizontal; and/or **in that** the cross-section of the boundary surface (31) substantially has the shape of a quadrant or of a semi-circle; and/or **in that** an end of the arc of a circle (33) extends horizontally in the direction of the tool (11); and/or **in that** an end of the arc of a circle (33) extends vertically downwardly.

4. A method in accordance with any one of the preceding claims, **characterized in that** the boundary surface (31) of the monitored zone (29) extends parallel to the direction of extent of the area of action (27) of the tool (11); and/or **in that** the boundary surface (31) is at least substantially closed along the arc of a circle (33); and/or in that the shape of the boundary surface (31) of the monitored zone (29) is matched to the shape of the tool (11), to the shape of the workpiece to be machined and/or to a geometrically determined preclusion of an intervention; and/or **in that** the extent of the monitored zone (29), starting from the area of action (27) of the tool (11) in its direction of movement (15), amounts to at least the sum of the radius (37) of the arc of a circle (33) and a residual height (43), with the residual height (43) being pre-determined by the body part of the operator to be protected.

5. A method in accordance with any one of the preceding claims, **characterized in that** the radius (37) of the arc of a circle (33) is pre-determined by the response time of the switching off process and/or by the maximum speed of approach of an operator, wherein the radius (37) of the arc of a circle (33) in particular amounts to at least the product of the response time and the maximum speed of approach; and/or wherein the radius (37) of the arc of a circle (33) preferably amounts to between 20 and 50 mm, in particular to between 24 and 40 mm.

6. A method in accordance with any one of the preceding claims, **characterized in that** the radius (37) of the arc of a circle (33) is pre-determined by the speed of movement of the tool, by the response time of the switching off process and/or by the slowing down path of the tool, wherein the radius (37) of the arc of a circle (33) in particular amounts to at least the sum of the product of the speed of movement and the response speed, on the one hand, and the slowing down path, on the other hand; and/or wherein the radius (37) of the arc of a circle (33) preferably amounts to between 6 and 16 mm, in particular to between 10 and 12 mm.

7. A method in accordance with any one of the preceding claims, **characterized in that** the center (35) of the arc of a circle (33) is arranged spaced apart, starting from the area of action (27) of the tool (11) in the direction of movement (15) of the tool, by at least the radius (37) of the arc of a circle (33) , in particular at least by the sum of the product of the speed of movement of the tool and the response time of the switching off process, on the one hand, and the slowing down path of the tool, on the other hand; and/or **in that** the center (35) of the arc of a circle (33) moves with the tool (11).

8. A method in accordance with any one of the preceding claims, **characterized in that** the movement of the tool (11) is divided into a closing movement (15) and a subsequent, slower machining movement, wherein the transition from the closing movement (15) to the working movement preferably takes place at a time at which the monitored zone (29) directly adjoins the desired position of the workpiece (25) to be machined, or adjoins it at a spacing of less than 10 mm; and/or wherein the monitoring of the monitored zone (29) is preferably deactivated at the time of the transition from the closing movement (15) to the machining movement.

9. A method in accordance with any one of the preceding claims, **characterized in that** the area of action (27) of the tool (11) is an elongate bending line or cutting edge.

10. A tool having an optoelectronic sensor for the securing of a hazardous zone (17) of the tool,
wherein the tool is movable and has an area of action (27), and wherein the tool is in particular a vertically downwardly moved upper tool (11) of a bending press, and wherein the area of action is the apex of the tool;
wherein the hazardous zone is pre-determined by the extent of the area of action (27) and by the slowing down path of the tool along the direction of movement (15);
wherein the sensor has at least one transmission device for the transmission of transmitted light in the direction of the hazardous zone, a reception device for the reception of transmitted light from the hazardous zone, and an evaluation device for the triggering of a switching off process on the detection of an intervention into the hazardous zone,
wherein the sensor can be moved at least partly with the tool (11); and
wherein the transmitted light can be transmitted into and can be received from a monitored zone (29) which is bounded by a boundary surface (31) whose cross-section extends parallel to the tool movement (15) and perpendicular to the direction of extent of the area of action of the tool at least along an arc of a circle (33) or beyond an arc of a circle (33),
**characterized in that**,
for the expanded securing of the hazardous zone with respect to dynamic interventions , the center (35) of the arc of a circle is arranged spaced apart from the area of action (27) of the tool in the direction of movement (15) of the tool; and **in that** the arc of a circle (33) has a radius (37) which is at least as large as the spacing between the center (35) of the arc of a circle and the area of action (27) of the tool, with the transmission device having an optical transmission system by which a transmitted light beam of the transmission device can be expanded so that the transmission device is suitable for the monitoring of a spatial volume , with the reception device being spatially resolving and having a matrix-like photoelectrical receiver so that the sensor is made such that the monitoring takes place with respect to the total spatial volume enclosed by the boundary surface.

11. A tool in accordance with claim 10, **characterized in that** the transmission device has at least one laser diode or light emitting diode.

12. A tool in accordance with one of the claims 10 and 11, **characterized in that** the reception device has a CCD receiver or a CMOS receiver.

13. A tool in accordance with any one of claims 10 to 12, **characterized in that** the transmission device and/or the reception device is arranged within the arc of a circle (33).

## Revendications

1. Procédé pour sécuriser une zone dangereuse (17) d'un outil déplacé présentant un emplacement d'attaque (27), en particulier d'un outil supérieur (11) déplacé verticalement vers le bas d'une presse plieuse, l'emplacement d'attaque étant la pointe de l'outil, dans lequel la zone dangereuse est définie par l'extension de l'emplacement d'attaque (27) de l'outil et par le trajet de suivi de l'outil le long de la direction de déplacement,
dans lequel un détecteur optoélectronique est déplacé conjointement avec l'outil (11) et surveille la zone dangereuse, et en cas de détection d'une intervention dans la zone dangereuse, une opération de coupure est déclenchée pour l'arrêt immédiat du mouvement de l'outil,
on surveille une zone de surveillance (29) présentant une surface de délimitation (31) dont la section transversale parallèle au mouvement d'outil (15) et perpendiculaire à la direction d'extension de l'emplacement d'attaque (27) de l'outil s'étend au moins le long d'un arc de cercle (33) ou au-delà d'un arc de cercle (33),
**caractérisé en ce que**
pour sécuriser davantage la zone dangereuse par rapport à des interventions dynamiques, le centre (35) de l'arc de cercle est agencé à distance de l'emplacement d'attaque (27) de l'outil en direction de mouvement (15) de l'outil, et l'arc de cercle (33) présente un rayon (37) qui est au moins aussi grand que la distance entre le centre (35) de l'arc de cercle et l'emplacement d'attaque (27) de l'outil, la surveillance de la zone de surveillance (29) s'effectuant au moyen d'un agencement d'au moins un dispositif émetteur de lumière et d'un dispositif récepteur à résolution locale, de sorte qu'un rayon lumineux émis par le dispositif émetteur de lumière est élargi au moyen d'une unité optique d'émission, et le dispositif récepteur comprend un agencement d'élément récepteur en forme de matrice, de sorte que la surveillance s'effectue par rapport à la totalité du volume de l'espace enfermé par la surface de délimitation.

2. Procédé selon la revendication 1,
**caractérisé en ce que**
la surface de délimitation (31) de la zone de surveillance (29) est adjacente à l'outil (11), et/ou
**en ce que** la surface de délimitation (31) de la zone de surveillance (29) est bombée convexe par rapport à l'emplacement d'attaque (27) de l'outil (11).

3. Procédé selon l'une des revendications précédentes,
**caractérisé en ce que**
l'arc de cercle (33) s'étend le long d'un angle de segment de cercle d'au moins 30°, en particulier d'environ 90° ou d'environ 180°, la bissectrice de l'angle de segment de cercle formant de préférence un angle de 45° par rapport à l'horizontale, et/ou **en ce que** la section transversale de la surface de délimitation (31) présente sensiblement la forme d'un quart de cercle ou d'un demi-cercle, et/ou **en ce qu'**une extrémité de l'arc de cercle (33) s'étend horizontalement en direction de l'outil (11), et/ou
**en ce qu'**une extrémité de l'arc de cercle (33) s'étend verticalement vers le bas.

4. Procédé selon l'une des revendications précédentes,
**caractérisé en ce que**
la surface de délimitation (31) de la zone de surveillance (29) s'étend parallèlement à la direction d'extension de l'emplacement d'attaque (27) de l'outil (11), et/ou
**en ce que** la surface de délimitation (31) est au moins sensiblement fermée le long de l'arc de cercle (33), et/ou
**en ce que** le tracé de la surface de délimitation (31) de la zone de surveillance (29) est adapté à la forme de l'outil (11), à la forme de la pièce à oeuvrer et/ou à exclure une intervention grâce à des facteurs géométriques, et/ou
**en ce que** l'extension de la zone de surveillance (29) s'élève, à partir de l'emplacement d'attaque (27) de l'outil (11) dans sa direction de mouvement (15), au moins à la somme du rayon (37) de l'arc de cercle (33) et d'une hauteur restante (43), la hauteur restante (43) étant définie par la partie corporelle à protéger de l'opérateur.

5. Procédé selon l'une des revendications précédentes,
**caractérisé en ce que**
le rayon (37) de l'arc de cercle (33) est défini par le temps de réponse de l'opération de coupure et/ou par la vitesse d'approche maximale d'un opérateur,
le rayon (37) de l'arc de cercle (33) s'élève en particulier au moins au produit du temps de réponse par la vitesse d'approche maximale, et/ou le rayon (37) de l'arc de cercle (33) est compris de préférence entre 20 et 50 mm, en particulier entre 24 et 40 mm.

6. Procédé selon l'une des revendications précédentes,
**caractérisé en ce que**
le rayon (37) de l'arc de cercle (33) est défini par la vitesse de mouvement de l'outil, par le temps de réponse de l'opération de coupure et/ou par le trajet de suivi de l'outil,
et le rayon (37) de l'arc de cercle (33) s'élève au moins à la somme d'une part du produit de la vitesse de mouvement par le temps de réponse et d'autre part du trajet de suivi,
et/ou
le rayon (37) de l'arc de cercle (33) est compris de préférence entre 6 et 16 mm, en particulier entre 10 et 12 mm.

7. Procédé selon l'une des revendications précédentes,
**caractérisé en ce que**
le centre (35) de l'arc de cercle (33) est agencé, à partir de l'emplacement d'attaque (27) de l'outil (11) en direction de mouvement (15) de l'outil, à une distance qui correspond au moins au rayon (37) de l'arc de cercle (33), en particulier au moins à la somme d'une part du produit de la vitesse de mouvement de l'outil par le temps de réponse de l'opération de coupure et d'autre part du trajet de suivi de l'outil,
et/ou
**en ce que** le centre (35) de l'arc de cercle (33) se déplace conjointement avec l'outil (11).

8. Procédé selon l'une des revendications précédentes,
**caractérisé en ce que**
le mouvement de l'outil (11) est subdivisé en un mouvement de fermeture (15) et en un mouvement d'usinage successif plus lent,
la transition du mouvement de fermeture (15) vers le mouvement d'usinage s'effectue de préférence à un instant auquel la zone de surveillance (29) se raccorde à la position de consigne de la pièce à oeuvrer (25) soit directement soit à une distance de moins de 10 mm, et/ou
la surveillance de la zone de surveillance (29) est désactivée de préférence à l'instant de la transition du mouvement de fermeture (15) vers le mouvement d'usinage.

9. Procédé selon l'une des revendications précédentes,
**caractérisé en ce que**
l'emplacement d'attaque (27) de l'outil (11) est une ligne de cintrage ou une arête de coupe allongée.

10. Outil comportant un détecteur optoélectronique pour sécuriser une zone dangereuse (17) d'un outil,
l'outil étant mobile et présentant un emplacement d'attaque (27), l'outil étant en particulier un outil supérieur (11) déplacé verticalement vers le bas d'une presse plieuse, et l'emplacement d'attaque étant la pointe de l'outil,
dans lequel la zone dangereuse est définie par l'extension de l'emplacement d'attaque (27) de l'outil et par le trajet de suivi de l'outil le long de la direction de déplacement (15),
le détecteur comprend au moins un dispositif émetteur pour émettre une lumière émise en direction de la zone dangereuse, un dispositif récepteur pour recevoir la lumière émise depuis la zone dangereuse, et un dispositif d'évaluation pour déclencher une opération de coupure en cas de détection d'une intervention dans la zone dangereuse,
le détecteur est mobile au moins partiellement conjointement avec l'outil (11), et
la lumière émise est susceptible d'être émise dans une zone de surveillance (29) et d'être reçue depuis celle-ci, zone qui est délimitée par une surface de délimitation (31) dont la section transversale parallèle au mouvement d'outil et perpendiculaire à la direction d'extension de l'emplacement d'attaque de l'outil s'étend au moins le long d'un arc de cercle (33) ou au-delà d'un arc de cercle (33),
**caractérisé en ce que**
pour sécuriser davantage la zone dangereuse par rapport à des interventions dynamiques, le centre (35) de l'arc de cercle est agencé à distance de l'emplacement d'attaque (27) de l'outil en direction de mouvement (15) de l'outil, et l'arc de cercle (33) présente un rayon (37) qui est au moins aussi grand que la distance entre le centre (35) de l'arc de cercle et l'emplacement d'attaque (27) de l'outil, le dispositif émetteur comprenant une optique d'émission par laquelle un rayon de lumière émise est susceptible d'être élargi, de sorte que le dispositif émetteur convient pour la surveillance d'un volume dans l'espace, et dans lequel le dispositif récepteur est un dispositif à résolution locale et comprend un récepteur photoélectrique en forme de matrice, de sorte que le détecteur est réalisé de telle manière que la surveillance est effectuée par rapport à la totalité du volume dans l'espace enfermé par la surface de délimitation.

11. Outil selon la revendication 10,
**caractérisé en ce que**
le dispositif émetteur comprend au moins une diode laser ou une diode électroluminescente.

12. Outil selon l'une des revendications 10 et 11,
**caractérisé en ce que** le dispositif récepteur comprend un récepteur CCD ou CMOS.

13. Outil selon l'une des revendications 10 à 12,
**caractérisé en ce que**
le dispositif émetteur et/ou le dispositif récepteur sont agencés le long de l'arc de cercle (33) et/ou à l'intérieur de l'arc de cercle (33).
